# FASCICULE DE BREVET EUROPEEN

(11) **EP 3 152 073 B1**
(45) Date de publication et mention de la délivrance du brevet: **07.10.2020**
(21) Numéro de dépôt: 15732300.7
(22) Date de dépôt: 11.05.2015
(51) Int. Cl.: B60G 21/055, B62D 65/02, B62D 65/12

(54) **PROCÉDÉ DE FIXATION AUTOMATIQUE D'UNE CHAPE DE BARRE ANTI-DÉVERS DE VÉHICULE AUTOMOBILE, AU MOYEN D'UN SUPPORT COUPLÉ À UN ROBOT**
VERFAHREN ZUR AUTOMATISIERTEN FIXIERUNG EINES BEFESTIGUNGSBÜGEL FÜR EINE STABILISATORSTANGE EINES KRAFTFAHRZEUGES, MIT HILFE EINES AN EINEN ROBOTER GEKOPPELTEN TRÄGERS
PROCESS FOR THE AUTOMATED FIXATION OF A MOUNTING BRACKET FOR A STABILIZER BAR OF A MOTOR VEHICLE, WITH THE HELP OF A SUPPORT COUPLED TO A ROBOT

(30) Priorité: 03.06.2014 FR 1454997
(43) Date de publication de la demande: 12.04.2017
(73) Titulaire: PSA Automobiles SA, 78300 Poissy (FR)
(72) Inventeur: LEGRAND, Francois Noel, F-25200 Montbeliard (FR)
(74) Mandataire: Fernandez, Francis Lionel
(86) Numéro de dépôt international: PCT/FR2015/051237
(87) Numéro de publication internationale: WO 2015/185815

(56) Documents cités:
- EP-A1- 1 953 014
- WO-A1-2008/054263
- WO-A1-2015/088459
- FR-A1- 2 994 129
- JP-A- S63 287 616
- US-A- 3 033 587

## Description

L'invention concerne les chapes de barre anti-dévers de véhicule automobile, et plus précisément la fixation de telles chapes sur des traverses de trains arrière de véhicules automobiles.

Comme le sait l'homme de l'art, les barres anti-dévers sont solidarisées à des chapes qui sont elles-mêmes solidarisées par vissage à des traverses de trains arrière de véhicules automobiles sur les lignes de montage. Cette solidarisation de la chape s'effectuant sous la caisse du véhicule automobile, elle impose au technicien qui l'effectue une position peu ergonomique.

Par ailleurs, cette solidarisation de la chape se fait via deux trous de fixation qu'elle comprend et qui sont prévus notablement plus large que les tiges des vis qui doivent les traverser afin de faciliter leur vissage et de tenir compte des dispersions dimensionnelles. Du fait de cette importante largeur des trous de fixation, le positionnement correct de la chape, et donc de la barre anti-dévers associée, nécessite l'utilisation de vis dites « à bout piloté » qui permettent d'importants rattrapages de jeu, ce qui s'avère onéreux.

L'invention a donc notamment pour but d'améliorer la situation grâce à une automatisation de la fixation des chapes de barre anti-dévers sur les traverses de trains arrière de véhicules automobiles.

Elle propose notamment à cet effet un procédé, destiné à permettre la fixation d'une chape de barre anti-dévers sur une traverse d'un véhicule automobile, et comprenant :
- une étape (i) dans laquelle on prend une chape comportant deux trous de fixation et au moins un trou auxiliaire, et à laquelle est solidarisée fixement une barre anti-dévers, puis on place cette chape sur un support, solidarisé à un robot et comprenant deux têtes de vissage et au moins un palier prolongé par une tige, de sorte que chaque trou auxiliaire soit traversé par une tige et soit placé sensiblement contre le palier associé et que ses deux trous de fixation soient placés respectivement au-dessus des têtes de vissage, et
- une étape (ii) dans laquelle on positionne le support sous la traverse de sorte que les trous de fixation soient placés respectivement sous deux trous filetés correspondant de cette traverse, puis on translate les têtes de vissage munies de vis afin d'introduire ces dernières dans les trous de fixation et de les visser dans les trous filetés, puis on (re)translate les têtes de vissage et on déplace le support.

Ainsi, on peut automatiser la fixation d'une chape de barre anti-dévers sur une traverse de train arrière en pilotant un robot, sans que le technicien en charge de cette fixation soit obligé de passer sous la caisse du véhicule automobile.

Par exemple, la chape peut comporter deux trous auxiliaires et le support peut comprendre deux paliers prolongés respectivement par deux tiges. Dans ce cas, dans l'étape (i) on place la chape sur le support de sorte que ses deux trous auxiliaires soient traversés respectivement par ces deux tiges et soient placés sensiblement contre les deux paliers.

L'invention propose également un support, destiné à permettre la fixation automatique d'une chape de barre anti-dévers sur une traverse d'un véhicule automobile, et comprenant une platine destinée à être solidarisée à un robot et comprenant :
- au moins un palier propre à permettre sensiblement l'appui temporaire d'un trou auxiliaire d'une chape et prolongé par une tige destinée à traverser temporairement ce trou auxiliaire, et
- deux têtes de vissage translatables pour l'introduction de vis dans des trous de fixation correspondants de la chape et propres à visser ces vis dans des trous filetés correspondants de la traverse.

Par exemple, ce support peut comprendre deux paliers propres à permettre respectivement et sensiblement les appuis temporaires de deux trous auxiliaires de la chape et prolongés respectivement par deux tiges destinées à traverser temporairement ces trous auxiliaires.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement, dans une vue en perspective de dessous, une partie d'un exemple de réalisation d'un support de chape selon l'invention placé sous une traverse de train arrière et juste avant son couplage temporaire à un exemple de réalisation d'une chape de barre anti-dévers selon l'invention,
- la figure 2 illustre schématiquement, dans une vue en perspective de dessous, la chape de la figure 1 avant qu'elle ne soit couplée à une barre anti-dévers,
- la figure 3 illustre schématiquement, dans une vue en perspective, le support de chape de la figure 1 après son couplage temporaire à la chape de barre anti-dévers de la figure 2, mais avant le début du vissage de cette chape à la traverse de train arrière,
- la figure 4 illustre schématiquement, dans une vue en perspective de dessous, le support de chape de la figure 1 après son couplage temporaire à la chape de barre anti-dévers de la figure 2, et pendant son déplacement vers la traverse de train arrière,
- la figure 5 illustre schématiquement, dans une vue en perspective de dessous, le support de chape de la figure 1 après son couplage temporaire à la chape de barre anti-dévers de la figure 2, et au début de la phase de vissage de cette dernière à la traverse de train arrière, et
- la figure 6 illustre schématiquement, dans une vue en perspective de dessous, la chape de barre anti-dévers de la figure 2 vissée à la traverse de train arrière, après le retrait du support de chape.

L'invention a notamment pour but de proposer un procédé destiné à permettre la fixation automatique d'une chape CB de barre anti-dévers BA sur une traverse TT d'un train arrière de véhicule automobile.

Dans ce qui suit, on considère, à titre d'exemple non limitatif, que le véhicule automobile est une voiture. Mais l'invention n'est pas limitée à ce type de véhicule automobile. Elle concerne en effet tout type de véhicule automobile comprenant une traverse de train arrière devant être équipée d'une barre anti-dévers.

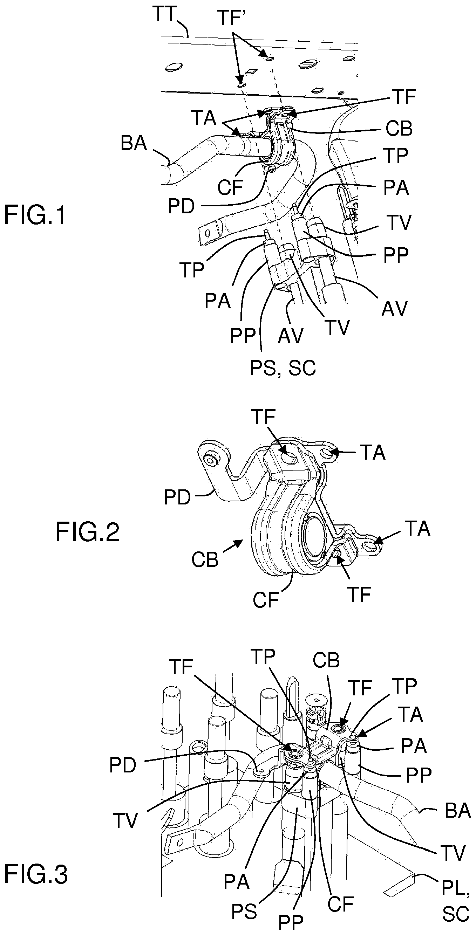

On a schématiquement représenté sur la figure 1 une partie d'un exemple de réalisation d'une traverse TT d'un train arrière dont la face inférieure (orientée vers la route) doit être équipée d'une chape CB de barre anti-dévers BA, par vissage au niveau de deux trous filetés TF'. On notera que ces deux trous filetés TF' peuvent être définis soit dans l'épaisseur de la paroi définissant la face inférieure de la traverse TT, soit dans deux écrous qui sont solidarisés par soudage derrière deux trous définis dans la face inférieure de la traverse TT.

Comme indiqué précédemment, l'invention propose notamment de mettre en oeuvre un procédé de fixation pour fixer automatiquement (par vissage) la chape CB de barre anti-dévers BA à une traverse TT.

Cette mise en œuvre se fait au moyen d'un support SC, partiellement illustré sur les figures 3 à 5, et destiné à supporter une chape CB équipée d'une barre anti-dévers BA.

Comme illustré sur la figure 2, une telle chape CB comprend une structure propre à être placée temporairement sur le support SC et comportant un collier CF, deux trous de fixation TF et au moins un trou auxiliaire TA. Le collier CF est destiné à immobiliser très étroitement la barre anti-dévers BA. Les deux trous de fixation TF sont destinés à être placés respectivement au-dessus de deux têtes de vissage TV du support SC, sur lesquelles on reviendra plus loin. Chaque trou auxiliaire TA est propre à s'appuyer sensiblement contre un palier PA du support SC et à être traversé par une tige TP qui prolonge ce palier PA.

On notera que dans l'exemple non limitatif illustré sur les figures 1 à 6, la structure de la chape CB comporte deux trous auxiliaires TA propres respectivement à s'appuyer sensiblement contre deux paliers PA du support SC et à être traversés par deux tiges TP prolongeant ces paliers PA. Ce mode de réalisation permet d'améliorer la stabilité de la chape CB (avec sa barre anti-dévers BA) sur le support SC et la précision du vissage de la chape CB dans une position prédéfinie. Mais dans une variante de réalisation, la chape pourrait ne comprendre qu'un seul trou auxiliaire TA placé dans une position centrale.

Par exemple, et comme illustré, chaque trou auxiliaire TA est défini dans une patte saillante de la chape CB.

Par ailleurs, et comme illustré non limitativement sur les figures 1 à 3 et 6, la chape CB peut également comprendre une patte additionnelle PD destinée à permettre la fixation d'un élément libre du véhicule.

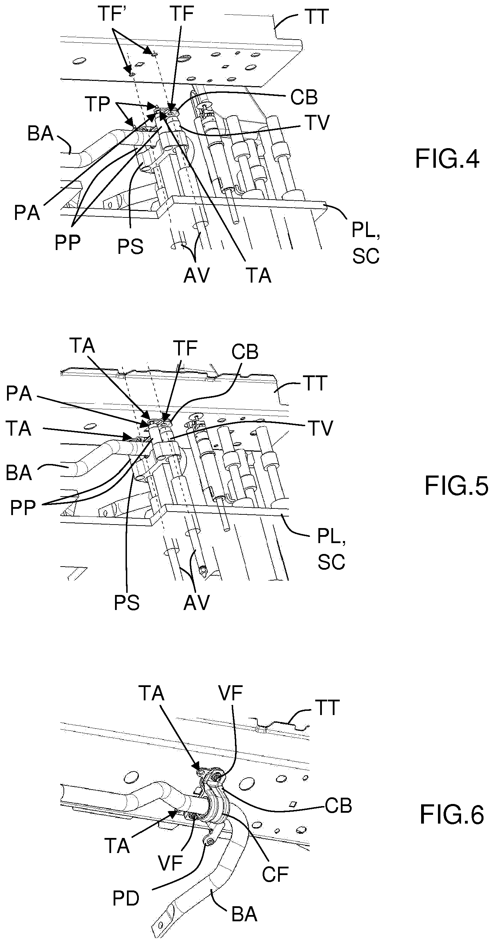

Le support SC comprend une platine PL destinée à être solidarisée à un robot pouvant déplacer cette dernière (PL) sous la caisse du véhicule en cours de montage. Comme illustré, cette platine PL comprend, d'une part, au moins un palier PA propre à permettre sensiblement l'appui temporaire d'un trou auxiliaire TA de la chape CB et prolongé par une tige AP destinée à traverser temporairement ce trou auxiliaire TA, et, d'autre part, deux têtes de vissage TV translatables pour l'introduction de deux vis VF (voir figure 6) dans les deux trous de fixation TF correspondants de la chape CB et propres à visser ces vis VF dans les deux trous filetés TF' correspondants de la traverse TT.

Compte tenu du mode de réalisation illustré de la chape CB, et comme illustré non limitativement sur les figures 1 à 6, la platine PL comporte ici deux paliers PA propres à permettre respectivement et sensiblement les appuis temporaires des deux trous auxiliaires TA de la chape CB et prolongés respectivement par deux tiges TP destinées à traverser temporairement ces trous auxiliaires TA. Mais dans une variante de réalisation, la platine PL pourrait ne comprendre qu'un seul palier PA prolongé par une tige AP, dans une position centrale.

Par exemple, et comme illustré non limitativement sur les figures 3 à 5, chaque palier PA et la tige TP associée peuvent constituer deux sous-parties d'un plot (ou pilote) PP qui est solidarisé fixement à une pièce de support PS, elle-même solidarisée fixement à la platine PL.

Par ailleurs, chaque tête de vissage TV peut se translater sensiblement verticalement du fait qu'elle est solidarisée fixement à l'extrémité d'un axe AV pouvant se translater par rapport à la platine PL de façon contrôlée par le robot, en fonction d'instructions fournies par un technicien. Chaque axe AV peut également être entraîné en rotation en vue de visser une vis VF logée dans la tête de vissage TV associée, de façon contrôlée par le robot, en fonction d'instructions fournies par un technicien.

Le procédé de fixation, selon l'invention, comprend au moins deux étapes (i) et (ii).

L'étape (i) consiste à prendre une chape CB à laquelle est solidarisée fixement une barre anti-dévers BA, puis à placer cette chape CB sur le support SC, de sorte que chaque trou auxiliaire TA soit traversé par une tige TP et soit sensiblement contre le palier PA et que ses deux trous de fixation TF soient placés respectivement au-dessus des têtes de vissage TV, comme illustré sur les figures 3 et 4.

Le placement de la chape CB sur le support SC est réalisé manuellement par un technicien.

L'étape (ii) consiste à positionner le support SC (au moyen du robot) sous la traverse TT de sorte que les trous de fixation TF soient placés respectivement sous deux trous filetés TF' correspondant de cette traverse TT, puis à translater (vers le haut) les têtes de vissage TV préalablement munies de vis VF (voir figures 4 et 5), afin d'introduire ces dernières (VF) dans les deux trous de fixation TF et de les visser dans les trous filetés TF' de la traverse TT en entraînant en rotation leurs axes AV. Le résultat de ce vissage est illustré sur la figure 6. Ensuite, on translate (vers le bas) les têtes de vissage TV, et on déplace (retire) le support SC (au moyen du robot).

Du fait des logements des tiges TA dans les trous auxiliaires TA, on est certain que la chape CB est précisément positionnée sur la pièce de support PS de la platine PL et donc que les deux trous de fixation TF seront précisément placés respectivement sous les deux trous filetés TF' correspondant de la traverse TT. Par conséquent, la chape CB peut être fixée (par vissage) dans une position prédéfinie sur la face inférieure de la traverse TT, de façon automatique. La précision de la position de fixation est en outre accrue du fait de la présence des paliers PA qui définissent des butées empêchant les déplacements verticaux de la chape CB au-delà d'une certaine course.

Grâce à l'invention le technicien peut contrôler le vissage en pilotant le robot et donc n'a plus besoin de passer sous la traverse. De plus, la fixation de la chape CB sur la traverse TT s'effectue plus rapidement et avec une meilleure précision moyenne.

## Revendications

1. Procédé de fixation d'une chape (CB) de barre anti-dévers (BA) sur une traverse (TT) d'un véhicule automobile, **caractérisé en ce qu'**il comprend une étape (i) dans laquelle on prend une chape (CB) comportant deux trous de fixation (TF) et au moins un trou auxiliaire (TA), et à laquelle est solidarisée fixement une barre anti-dévers (BA), puis on place cette chape (CB) sur un support (SC), solidarisé à un robot et comprenant deux têtes de vissage (TV) et au moins un palier (PA) prolongé par une tige (TP), de sorte que chaque trou auxiliaire (TA) soit traversé par une tige (TP) et soit placé sensiblement contre ledit palier (PA) et que ses deux trous de fixation (TF) soient placés respectivement au-dessus desdites têtes de vissage (TV), et une étape (ii) dans laquelle on positionne ledit support (SC) sous ladite traverse (TT) de sorte que lesdits trous de fixation (TF) soient placés respectivement sous deux trous filetés (TF') correspondant de ladite traverse (TT), puis on translate lesdites têtes de vissage (TV) munies de vis (VF) afin d'introduire ces dernières (VF) dans lesdits trous de fixation (TF) et de les visser dans lesdits trous filetés (TF'), puis on translate lesdites têtes de vissage (TV) et on déplace ledit support (SC).

2. Procédé selon la revendication 1, **caractérisé en ce que** ladite chape (CB) comporte deux trous auxiliaires (TA) et ledit support (SC) comprend deux paliers (PA) prolongés respectivement par deux tiges (TP), et **en ce que** dans ladite étape (i) on place ladite chape (CB) sur ledit support (SC) de sorte que ses deux trous auxiliaires (TA) soient traversés respectivement par lesdites tiges (TP) et soient placés sensiblement contre lesdits paliers (PA).

3. Support (SC) pour la fixation d'une chape (CB) de barre anti-dévers (BA) sur une traverse (TT) d'un véhicule automobile, **caractérisé en ce qu'**il comprend une platine (PL) destinée à être solidarisée à un robot et comprenant i) au moins un palier (PA) propre à permettre sensiblement l'appui temporaire d'un trou auxiliaire (TA) de ladite chape (CB) et prolongé par une tige (TP) destinée à traverser temporairement ce trou auxiliaire (TA), et ii) deux têtes de vissage (TV) translatables pour l'introduction de vis (VF) dans des trous de fixation (TF) correspondants de ladite chape (CB) et propres à visser lesdites vis (VF) dans des trous filetés (TF') correspondants de ladite traverse (TT).

4. Support selon la revendication 3, **caractérisé en ce qu'**il comprend deux paliers (PA) propres à permettre respectivement et sensiblement les appuis temporaires de deux trous auxiliaires (TA) de ladite chape (CB) et prolongés respectivement par deux tiges (TP) destinées à traverser temporairement ces trous auxiliaires (TA).

## Patentansprüche

1. Verfahren zur Befestigung eines Gabelkopfes (CB) für einen Stabilisator (BA) an einem Querträger (TT) eines Kraftfahrzeugs, **dadurch gekennzeichnet, dass** es einen Schritt (i) umfasst, in dem ein Gabelkopf (CB) genommen wird, der zwei Befestigungslöcher (TF) und mindestens ein Hilfsloch (TA) aufweist, und an dem ein Stabilisator (BA) fest angebracht ist, dann wird dieser Gabelkopf (CB) auf einen Träger (SC) gesetzt, der an einem Roboter befestigt ist und zwei Schraubköpfe (TV) und mindestens ein Lager (PA) aufweist, das durch eine Stange (TP) verlängert wird, so dass jedes Hilfsloch (TA) von einer Stange (TP) gekreuzt wird und im Wesentlichen gegen das Lager (PA) angeordnet ist und seine beiden Befestigungslöcher (TF) jeweils über den Schraubenköpfen (TV) angeordnet sind, und eine Stufe (ii), in der der Träger (SC) unter der Querstange (TT) so angeordnet ist, dass die Befestigungslöcher (TF) jeweils unter zwei entsprechenden Gewindelöchern (TF') der Querstange (TT) angeordnet sind, dann werden die mit Schrauben (VF) versehenen Schraubköpfe (TV) verschoben, um letztere (VF) in die Befestigungslöcher (TF) einzuführen und sie in die Gewindelöcher (TF') zu schrauben, dann werden die Schraubköpfe (TV) verschoben und der Träger (SC) bewegt.

2. Verfahren nach Anspruch 1, **dadurch gekennzeichnet, dass** der Gabelkopf (CB) zwei Hilfslöcher (TA) aufweist und der Träger (SC) zwei Lager (PA) aufweist, die jeweils durch zwei Stangen (TP) verlängert sind, und dass in dem Schritt (i) der Gabelkopf (CB) auf dem Träger (SC) so angeordnet wird, dass seine beiden Hilfslöcher (TA) jeweils von den Stangen (TP) durchquert werden und im Wesentlichen gegen die Lager (PA) platziert werden.

3. Träger (SC) zur Befestigung eines Gabelkopfes (CB) eines Stabilisators (BA) an einem Querträger (TT) eines Kraftfahrzeugs, **dadurch gekennzeichnet, dass** er eine Platte (PL) umfasst, die dazu bestimmt ist, an einem Roboter befestigt zu werden, und die i) mindestens ein Lager (PA) umfasst, das in der Lage ist, im Wesentlichen die vorübergehende Abstützung eines Hilfslochs (TA) des besagten Gabelkopfes (CB) zu ermöglichen, das durch eine Stange (TP) verlängert wird, die dazu bestimmt ist, dieses Hilfsloch (TA) vorübergehend zu durchqueren, und ii) zwei verschiebbare Schraubköpfe (TV) zum Einsetzen von Schrauben (VF) in entsprechende Befestigungslöcher (TF) des Gabelkopfes (CB) und geeignet zum Einschrauben der Schrauben (VF) in entsprechende Gewindelöcher (TF') des Querstücks (TT).

4. Stütze nach Anspruch 3, **dadurch gekennzeichnet, dass** sie zwei Lager (PA) umfasst, die jeweils und im Wesentlichen die vorübergehende Abstützung von zwei Hilfslöchern (TA) des Gabelkopfes (CB) ermöglichen können und jeweils durch zwei Stangen (TP) verlängert werden, die dazu bestimmt sind, vorübergehend durch diese Hilfslöcher (TA) hindurchzugehen.

## Claims

1. A method of fixing a clevis (CB) for an anti-roll bar (BA) to a cross member (TT) of a motor vehicle, **characterised in that** it comprises a step (i) in which a clevis (CB) is taken which has two fixing holes (TF) and at least one auxiliary hole (TA), and to which an anti-roll bar (BA) is fixedly attached, then this clevis (CB) is placed on a support (SC), attached to a robot and comprising two screwing heads (TV) and at least one bearing (PA) extended by a rod (TP), so that each auxiliary hole (TA) is crossed by a rod (TP) and is placed substantially against said bearing (PA) and its two fixing holes (TF) are placed respectively above said screw heads (TV), and a step (ii) in which said support (SC) is positioned under said cross member (TT) so that said fixing holes (TF) are placed respectively under two corresponding threaded holes (TF') of said cross member (TT), then said screwing heads (TV) provided with screws (VF) are translated in order to introduce the latter (VF) into said fixing holes (TF) and screw them into said threaded holes (TF'), then said screwing heads (TV) are translated and said support (SC) is moved.

2. Method according to claim 1, **characterized in that** said clevis (CB) comprises two auxiliary holes (TA) and said support (SC) comprises two bearings (PA) extended respectively by two rods (TP), and **in that** in said step (i) said clevis (CB) is placed on said support (SC) so that its two auxiliary holes (TA) are traversed respectively by said rods (TP) and are placed substantially against said bearings (PA).

3. Support (SC) for fixing a clevis (CB) of an anti-roll bar (BA) to a cross member (TT) of a motor vehicle, **characterised in that** it comprises a plate (PL) intended to be fixed to a robot and comprising i) at least one bearing (PA) capable of substantially allowing temporary support of an auxiliary hole (TA) in the said clevis (CB) and extended by a rod (TP) intended to pass temporarily through this auxiliary hole (TA), and ii) two translatable screwing heads (TV) for inserting screws (VF) into corresponding fixing holes (TF) of said clevis (CB) and suitable for screwing said screws (VF) into corresponding threaded holes (TF') of said crosspiece (TT).

4. Support according to claim 3, **characterized in that** it comprises two bearings (PA) capable of respectively and substantially allowing the temporary support of two auxiliary holes (TA) of said clevis (CB) and respectively extended by two rods (TP) intended to temporarily pass through these auxiliary holes (TA).
